# EUROPEAN PATENT APPLICATION

(11) **EP 4 567 989 A1**
(43) Date of publication of application: **11.06.2025**
(21) Application number: 23853931.6
(22) Date of filing: 24.04.2023
(51) Int. Cl.: H01M 50/244

(54) **BATTERY CABINET AND ENERGY STORAGE SYSTEM USING SAME**

(30) Priority: 17.08.2022 CN 202210987305
(71) Applicant: BYD Company Limited, Shenzhen, Guangdong 518118 (CN)
(72) Inventor: SUI, Jiahai, Shenzhen, Guangdong 518118 (CN); YIN, Xueqin, Shenzhen, Guangdong 518118 (CN); CAO, Hu, Shenzhen, Guangdong 518118 (CN); YIN, Xiaoqiang, Shenzhen, Guangdong 518118 (CN)
(74) Representative: Taor, Simon Edward William
(86) International application number: PCT/CN2023/090267
(87) International publication number: WO 2024/037023

(57) **Abstract**

A battery cabinet and an energy storage system using same. The battery cabinet comprises a cabinet body in which a containing cavity is formed; a plurality of battery units stacked in the containing cavity, each battery unit being provided with a heat dissipation flow channel; a temperature adjustment device, arranged in the containing cavity, communicated with the heat dissipation flow channels of the battery units, and used for heat exchanging with the outside of the cabinet body so as to adjust the temperature of the plurality of battery units; and a battery management device, arranged in the containing cavity and electrically connected to the battery units. The battery units are provided so as to facilitate mounting and fixing of batteries; in addition, a heat dissipation flow channel is formed in each battery layer so as to facilitate uniform heat dissipation.

## Description

### CROSS-REFERENCE TO RELATED APPLICATION

This application claims priority to and benefits of Chinese Patent Application No. 202210987305.0 filed on August 17, 2022 and entitled "BATTERY CABINET AND ENERGY STORAGE SYSTEM USING SAME". The entire content of the above-referenced application is incorporated by reference.

### FIELD

The present disclosure relates to the field of batteries, and in particular, to a battery cabinet and an energy storage system using the same.

### BACKGROUND

With the development of electrochemical energy storage technology, energy storage is applied more and more in power industry, for example, new energy projects such as wind and photovoltaic cause significant fluctuations in a power grid during grid connection due to limitations of natural environment. A problem that the power grid cannot consume due to the significant fluctuations can be effectively solved through a large-scale energy storage system. To meet capacity requirements, energy storage systems are usually bulky and usually include a large number of cells. Mounting, fixation, and heat dissipation of these cells face significant challenges.

### SUMMARY

In view of this, the present disclosure aims to provide a battery cabinet and an energy storage system using the same, which are configured to solve the problems of mounting, fixation, and heat dissipation of batteries in the battery cabinet and the energy storage system. The present disclosure provides the following technical solutions.

A battery cabinet is provided. The battery cabinet includes:
a cabinet body, internally provided with an accommodation cavity;
multiple battery units, stacked in the accommodation cavity, where each battery unit is provided with a heat dissipation flow channel;
a temperature adjusting device, arranged in the accommodation cavity and butted to the heat dissipation flow channel of the battery unit, to perform heat exchange with an interior of the cabinet body to adjust temperatures of the multiple battery units; and
a battery management device, arranged in the accommodation cavity and electrically connected to the battery units.

In some implementation, an opening is provided in one side of the cabinet body. The battery cabinet further includes a cabinet door. The cabinet door is movably connected to the cabinet body to open or close the opening.

The temperature adjusting device is mounted on the cabinet door.

In some embodiments, the temperature adjusting device is an air cooling device. Each battery unit includes:
multiple cells; and
a shelf, configured to accommodate and fix the multiple cells. The shelf architectural is provided with a heat dissipation flow channel, and the heat dissipation flow channel is adapted to be communicated with the air cooling device to guide a cooling airflow to perform heat exchange with the cells.

In some implementation modes, the air cooling device includes an external circulation air inlet, an external circulation air outlet, an internal circulation air inlet, and an internal circulation air outlet. Both the external circulation air inlet and the external circulation air outlet are adapted to be communicated with external atmosphere, and both the internal circulation air inlet and the internal circulation air outlet are communicated with the accommodation cavity.

An air guide duct is provided in a top in the accommodation cavity, and one end of the air guide duct is communicated with the internal circulation air outlet and is configured to guide an airflow blown out from the internal circulation air outlet to flow through the battery units.

In some implementation modes, the battery cabinet further includes an air guide piece arranged at the top in the accommodation cavity, and the air guide piece matches the cabinet body to form the air guide conduct.

In some implementation modes, the heat dissipation flow channel is communicated with one side of the shelf close to the cabinet door and one side far away from the cabinet door.

The airflow blown out from the internal circulation air outlet is adapted to be guided to one side of the battery unit away from the cabinet door through the air guide conduct, and is collected to enter the internal circulation air inlet after flowing through the heat dissipation flow channel.

In some implementation modes, the airflow blown out from the internal circulation air outlet is adapted to be guided to a gap between the shelf and an inner wall of the cabinet body by the air guide duct.

In some implementation modes, the temperature adjusting device is a liquid cooling device. The battery unit includes:
a shelf, where multiple battery accommodation areas are formed in the shelf;
multiple cells, where the multiple cells are respectively accommodated in the battery accommodation areas; and
a heat dissipation flow channel, formed in the shelf and configured to circulate a cooling medium to cool the cells.

In some implementation modes, the shelf includes:
a tray, where one end of the tray is open; and
multiple partition plates, arranged in the tray to partition an interior of the tray into the multiple battery accommodation areas.

The heat dissipation flow channel is formed in the tray and at least part of the partition plates.

In some implementation modes, in the battery unit, a terminal of the cell faces an open end of the tray, and the terminals of the multiple cells are electrically connected through connecting pieces.

In some implementation modes, in the multiple stacked battery units, the tray of the battery unit located on an upper layer seals the open end of the tray of an adjacent battery unit on a lower layer.

The battery cabinet further includes an upper cover, configured to seal the open end of the tray of the battery unit located on an uppermost layer.

An energy storage system includes:
multiple foregoing battery cabinets, where the multiple battery cabinets form a battery assembly;
a bearing frame, where an outer contour of the bearing frame is configured in a shape of a container and defines an accommodation space configured to accommodate and fix the battery assembly;
a distribution device, adapted to connect an external load to provide electrical energy to the external load; and
a junction device, adapted to electrically connect the multiple battery cabinets and the distribution device.

In some implementation modes, a mounting portion is formed on the bearing frame.

At least one of the distribution device and the junction device is mounted on the mounting portion and is at least partially located in the outer contour.

In some implementation modes, the container is a 20-foot standard container, and the battery assembly is cuboid-shaped and is defined with a width dimension W, a depth dimension D, and a height dimension H, which satisfy: 5000 mm≤W≤5958 mm, 2200 mm≤D≤2438 mm, and 2191 mm≤H≤2746 mm.

In some implementation modes, the container is a 40-foot standard container; and the battery assembly is cuboid-shaped and is defined with a width dimension W, a depth dimension D, and a height dimension H, which satisfy: 11138 mm≤W≤12096 mm, 2200 mm≤D≤2438 mm, and 2191 mm≤H≤2746 mm.

In some implementation modes, the bearing frame includes:
a bottom bracket, configured to bear the battery assembly and defining two opposite sides of the battery assembly, where the bottom bracket has a length direction, a width direction, and a height direction that are orthogonal to one another; and
two end frames, where the two end frames are oppositely arranged on two sides of the bottom bracket in the length direction and are configured to define the other two opposite sides of the battery assembly.

In some implementation modes, the bottom bracket is defined with a height dimension B₁, which satisfies: 150 mm≤B₁≤400 mm.

In some implementation modes, the end frame includes:
two longitudinal beams, extending in the height direction and spaced away on the two sides of the bottom bracket in the width direction, where one end of the longitudinal beam is connected to the bottom bracket; and
a cross beam, connected between the other ends of the two longitudinal beams.

In some implementation modes, the longitudinal beam is defined with a dimension A₁ in the length direction, which satisfies: 50 mm≤A₁≤80 mm.

In some implementation modes, the two longitudinal beams, the cross beam, and the bottom bracket are enclosed to form a mounting space, and the mounting portion is arranged on an inner wall of at least one of the longitudinal beams.

At least one of the distribution device and the junction device is mounted on the mounting portion and is located in the mounting space.

In some implementation modes, both the distribution device and the junction device are located in the mounting space, and the distribution device and the junction device do not protrude from an end face of the longitudinal beam.

In some implementation modes, the bottom bracket includes:
two side plates, where the two side plates are arranged in parallel and extend in the length direction; and
multiple reinforcing plates, where the multiple reinforcing plates are spaced away from each other, two ends of the reinforcing plate are respectively connected to inner walls of the two side plates, and a wire hole is formed in the reinforcing plate.

In some implementation modes, the bearing frame further includes a top beam, the top beam is connected between the two end frames and is arranged opposite to the bottom bracket to define an upper side of the battery assembly.

In some implementation modes, the battery cabinet is cuboid-shaped and is defined with a width dimension W₁, a depth dimension D₁, and a height dimension H₁, which satisfy: 1000 mm≤W₁≤1192 mm, and a single battery cabinet is defined with a depth 1100 mm≤D₁≤1219 mm and a height dimension 1850 mm≤H₁≤2746 mm.

Width directions of the multiple battery cabinets are arranged in the length direction of the battery assembly.

In the foregoing battery cabinet and the energy storage system using the same, mounting, fixation, and heat dissipation of a large number of cells are problems to be solved. The battery units are arranged, which facilitates mounting and fixation of a large number of cells in layers. Meanwhile, the heat dissipation flow channel is formed in each battery layer, which not only solves a problem of heat dissipation, and but also achieves uniform heat dissipation of the cells at various positions of the battery cabinet in a layered arrangement form.

Other aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible in the description of the embodiments made with reference to the following accompanying drawings.
FIG. 1 is a schematic structural diagram of an energy storage system according to the present disclosure in an embodiment;
FIG. 2 is the energy storage system shown in FIG. 1, and shows contour dimensions;
FIG. 3 is a schematic structural diagram of a bearing frame in the energy storage system shown in FIG. 1;
FIG. 4 is a schematic structural diagram of an energy storage system according to the present disclosure in another embodiment;
FIG. 5 is a schematic decomposition diagram of a partial structure of an energy storage system according to the present disclosure in an embodiment;
FIG. 6 is a schematic assembly diagram of a bearing frame, a junction device, and a distribution device in the energy storage system shown in FIG. 5, where the bearing frame is shown in a broken view;
FIG. 7 is a schematic structural diagram of a battery cabinet in the energy storage system shown in FIG. 1 or FIG. 4;
FIG. 8 is an exploded view of the battery cabinet shown in FIG. 7, and a cabinet door of the battery cabinet is in an open state;
FIG. 9 is a schematic diagram of a partial structure of the battery cabinet shown in FIG. 7, and a cabinet door is in an open state;
FIG. 10 is a schematic structural diagram of multiple battery units in the battery cabinet shown in FIG. 7;
FIG. 11 is a schematic structural diagram of a battery cabinet in an energy storage system in a preferred embodiment; and
FIG. 12 is a schematic structural diagram of a shelf of a battery unit in FIG. 11.

In the drawings:
energy storage system 1000
bearing frame 100, bottom bracket 110, end frame 120, side plate 1101, reinforcing plate 1102, wire hole 1103, longitudinal beam 1201, cross beam 1202, top beam 1203, corner piece 1204, fastener 1205, mounting portion 1206
battery cabinet 200, battery assembly 201, cabinet body 210, cabinet door 220, battery unit 230, temperature adjusting device 240, battery management device 250, lifting lug 260, air guide piece 270, explosion-proof valve 280, shelf 2301, cell 2302, connecting piece 2303, water inlet/outlet pipe 2304, tray 2311, partition plate 2312, external circulation air inlet 2401, external circulation air outlet 2402, internal circulation air inlet 2403, and internal circulation air outlet 2404
distribution device 300, junction device 400, pull rod 500, cable 600, and protective box 700.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining present disclosure, and cannot be construed as a limitation on present disclosure.

In the description of the present disclosure, it is to be understood that orientation or position relationships indicated by terms such as "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", and "circumferential" are based on orientation or position relationships shown in the accompanying drawings, and are used only for ease and brevity of illustration and description, rather than indicating or implying that the mentioned device or component have to have a particular orientation or have to be constructed and operated in a particular orientation. Therefore, such terms cannot be construed as a limitation to the present disclosure.

In the description of the present disclosure, "multiple" means two or more than two, and "several" means one or more.

The following describes specific implementation mode of the present disclosure in detail with reference to the accompanying drawings.

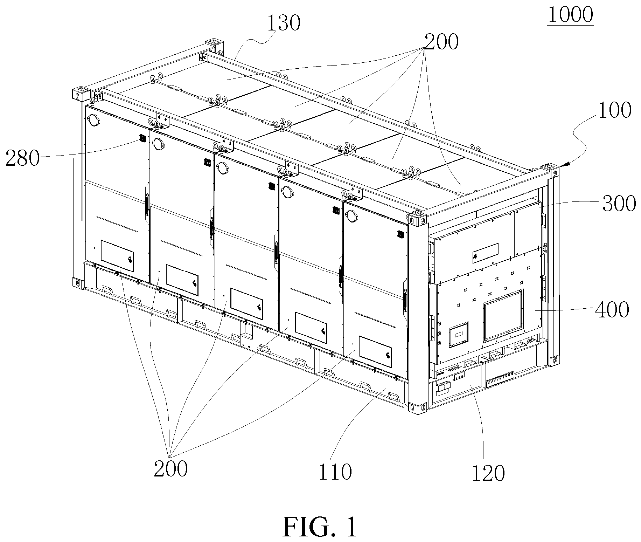

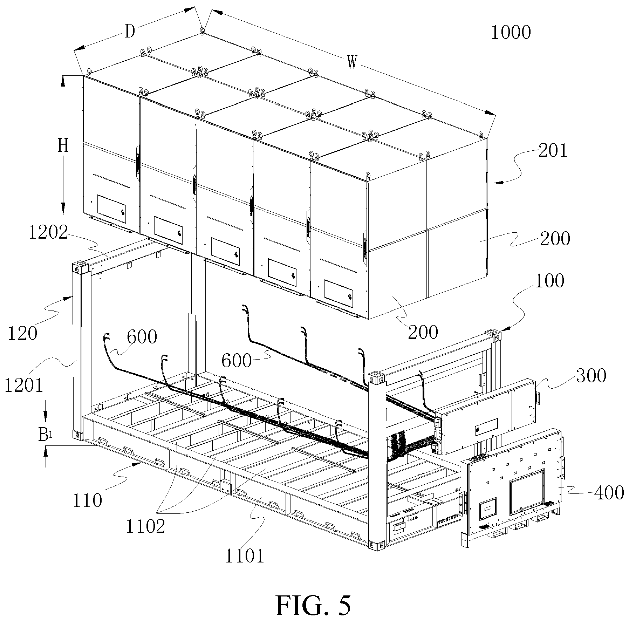

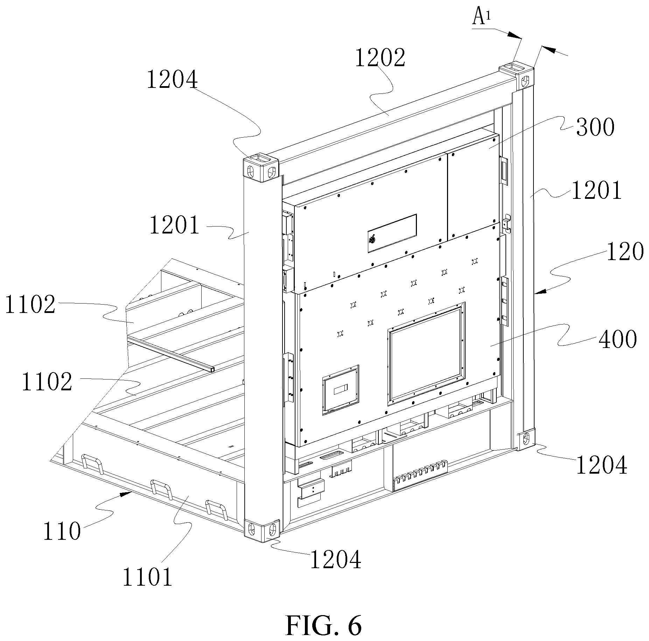

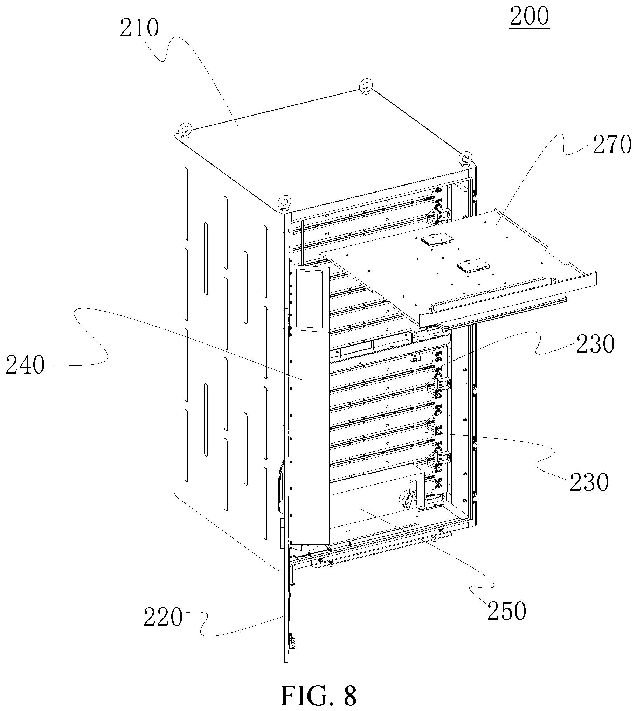

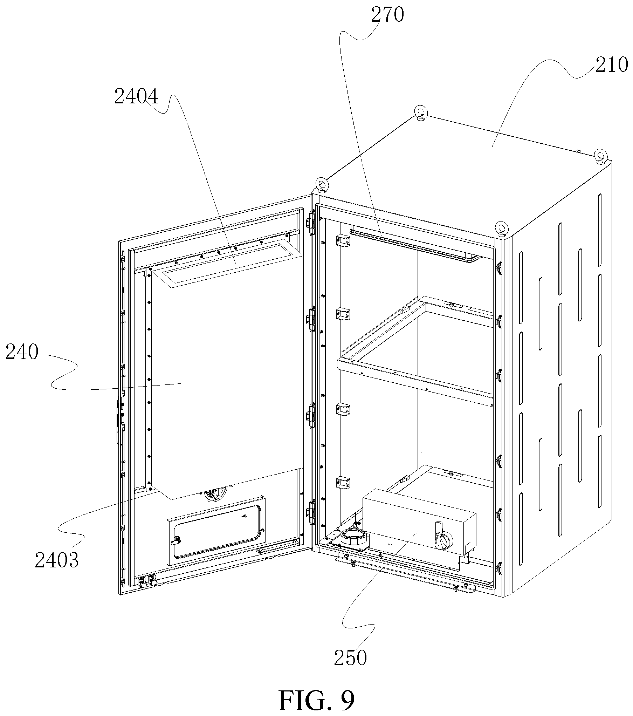

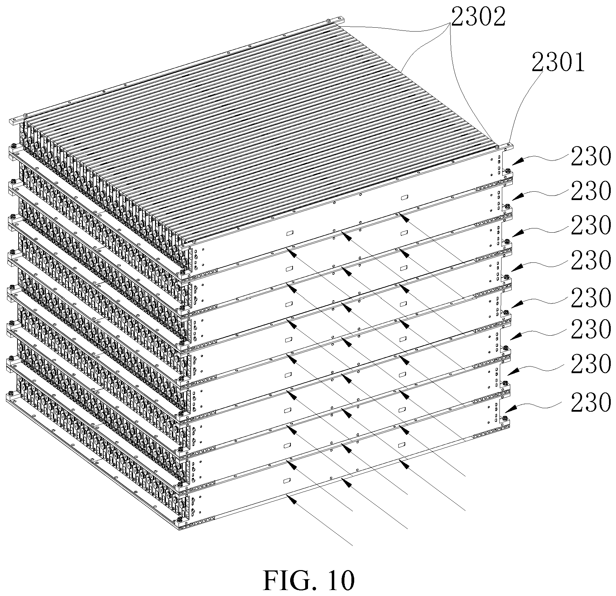

Referring to FIG. 1 to FIG. 12, an energy storage system 1000 includes a bearing frame 100, a battery assembly 201, a junction device 300, and a distribution device 400.

The energy storage system 1000 may usually be an industrial or commercial energy storage system. The battery assembly 201 included in the energy storage system 1000 may be set according to specific requirements. An outer contour of the bearing frame 100 is configured in a shape of a container, and the bearing frame 100 defines an accommodation space configured to accommodate and fix the battery assembly 201. In addition, a mounting portion 1206 is formed on the bearing frame 100, and is configured to mount at least one of the junction device 300 and the distribution device 400.

The distribution device 400 is adapted to connect an external load to provide electrical energy to the external load. The junction device 300 is adapted to electrically connect the battery assembly 201 and the distribution device 400. The battery assembly 201 usually includes multiple battery units, for example, the battery assembly 201 may include multiple battery cabinets 200. The multiple battery cabinets 200 are connected to the distribution device 400 through the junction device 300, and the distribution device 400 distributes power output uniformly. In other implementation modes, the battery assembly 201 may alternatively be in other forms, for example, including one battery cabinet 200. A contour of the battery cabinet 200 in this implementation mode may be similar to or the same as an overall contour formed by the multiple battery cabinets 200 in the foregoing implementation modes. An interior of one battery cabinet 200 in this implementation mode may include multiple battery assemblies. The multiple battery assemblies may be collected and connected to the distribution device 400 through the junction device 300, and the distribution device 400 distributes power output uniformly.

Referring to FIG. 1, FIG. 2, FIG. 4, and FIG. 5, in some implementation modes, the battery assembly 201 may include multiple battery cabinets 200. The multiple battery cabinets 200 are arranged in multiple rows in the length direction and/or arranged in multiple columns in the width direction and fill the accommodation space formed by the bearing frame 100. Specifically, the multiple battery cabinets 200 may be the same units, and may be arranged in one row and multiple columns, one column and multiple rows, and multiple columns and multiple rows as a whole according to settings of contour dimensions. The multiple battery cabinets 200 may divide the accommodation space equally.

It may be understood that, in some implementation modes, the battery assembly 201 may alternatively include only one battery cabinet 200, as long as the battery cabinet 200 can fill the accommodation space.

The battery cabinet 200 may include a cabinet body 210, multiple battery units 230, a temperature adjusting device 240, and a battery management device 250.

The cabinet body 210 is internally provided with an accommodation cavity. The multiple battery units 230 is arranged in the accommodation cavity. The temperature adjusting device 240 is arranged in the accommodation cavity and is configured to perform heat exchange with an outside of the cabinet body 210 to adjust temperatures of the multiple battery units 230. The battery management device 250 may alternatively be arranged in the accommodation cavity, electrically connected to the multiple battery units 230, and configured for charge/discharge management of the battery units 230.

In a specific implementation, an opening may be provided in one side of the cabinet body 210. The battery cabinet 200 further includes a cabinet door 220. The cabinet door 220 is movably connected to the cabinet body 210 to open or close the opening. The cabinet door 220 is arranged, which can facilitate operations such as mounting, overhauling, and maintaining of the battery cabinet 200.

The temperature adjusting device 240 may be mounted on the cabinet door 220. In a specific implementation, the temperature adjusting device 240 may be an air conditioner, that is, the battery cabinet 200 dissipates heat in an air cooling form. The temperature adjusting device 240 may alternatively be a water cooling device. A heat exchange portion of the water cooling device may alternatively be arranged on the cabinet door 220. The following describes by taking the temperature adjusting device 240 being an air cooled air conditioner as an example.

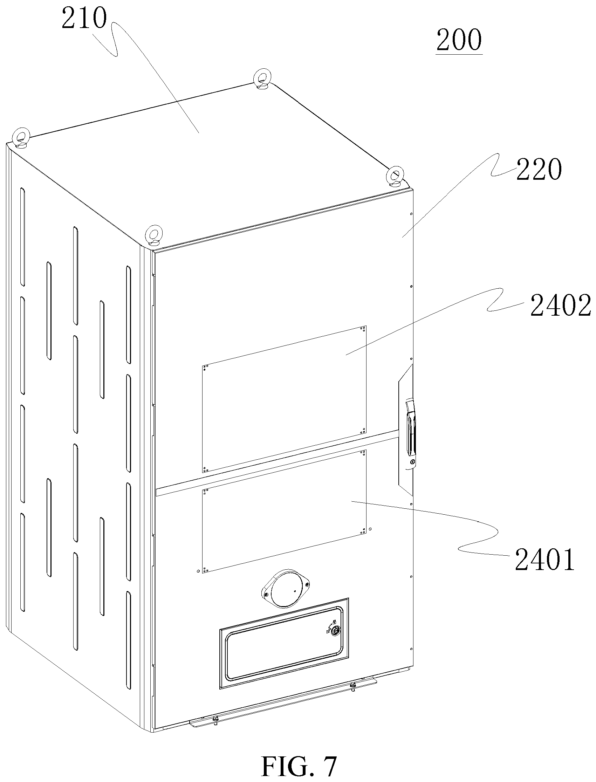

For example, as shown in FIG. 7 to FIG. 10, in some implementation modes, the battery units 230 in the battery cabinet 200 are battery units. To facilitate understanding, a subsequent battery unit and the battery unit 230 adopt the same number. Specifically, the battery cabinet 200 includes at least two battery units 230. The at least two battery units 230 are arranged in the cabinet body 210 and are arranged in the height direction. Each battery unit 230 includes a shelf, and each direction of the length direction and the height direction includes at least one cell 2302. An air duct is formed between two adjacent battery units 230, and is configured to circulate a cooling airflow.

In the foregoing battery cabinet 200 and the energy storage system 1000 using the same, mounting, fixation, and heat dissipation of a large number of cells are problems to be solved. The battery units are arranged, which facilitates of mounting and fixation of a large number of cells in layers. Meanwhile, the heat dissipation flow channel is formed in each battery unit 230, which not only solves a problem of heat dissipation, and but also achieves uniform heat dissipation of the cells at various positions of the battery cabinet 200 in a layered arrangement form.

The temperature adjusting device 240 is an air cooling device and include an external circulation air inlet 2401, an external circulation air outlet 2402, an internal circulation air inlet 2403, and an internal circulation air outlet 2404. Both the external circulation air inlet 2401 and the external circulation air outlet 2402 are adapted to be communicated with external atmosphere; and both the internal circulation air inlet 2403 and the internal circulation air outlet 2404 are communicated with the accommodation cavity.

An air guide duct is provided in a top in the accommodation cavity, and one end of the air guide duct is communicated with the internal circulation air outlet 2404 and is configured to guide an airflow blown from the internal circulation air outlet 2404 to flow through the battery units 230.

For example, the battery cabinet 200 further includes an air guide piece 270 arranged at the top in the accommodation cavity, and the air guide piece 270 matches the cabinet body to form the air guide duct. The air guide duct is configured to guide the airflow blown out from the internal circulation air outlet 2404 to one side of the battery unit 230 away from the cabinet door 220. In other words, cold air blown from the temperature adjusting device 240 into the cabinet body 210 is guided to rear sides of the multiple battery units 230 through the air guide piece 270 at the top, and enters the air ducts between the battery units 230 in sequence from top to bottom to cool the cells 2302.

In some implementation modes, the air guide duct is further configured to guide the airflow blown out from the internal circulation air outlet 2404 to at least one side of the battery unit 230 adjacent to the cabinet door 220. In short, the air guide piece 270 not only guides the cooling airflow to the rear sides of the battery units 230, but also simultaneously guides the cooling airflow to a left side and a right side of the battery unit 230.

An explosion-proof valve 280 is arranged on the cabinet door. An interior of the cabinet body 210 may be communicated with the external atmosphere when the explosion-proof valve 280 is open.

In some implementation modes, the battery cabinet 200 is cuboid-shaped and is defined with a width dimension W₁, a depth dimension D₁, and a height dimension H₁, which satisfy: 1000 mm≤W₁≤1192 mm, and a single battery cabinet is defined with a depth 1100 mm≤D₁≤1219 mm and a height dimension 1850 mm≤H₁≤2746 mm. Width directions of the multiple battery cabinets 200 are arranged in the length direction of the battery assembly 201.

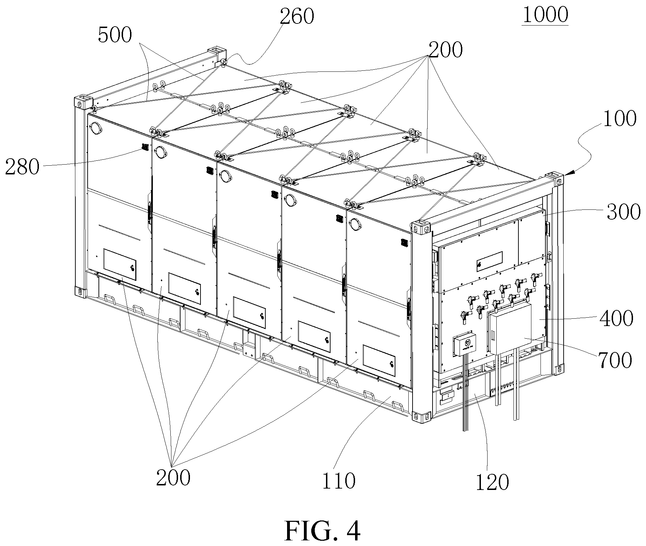

Referring to FIG. 4, in some implementation modes, the battery assembly 201 includes multiple battery cabinets 200 arranged in multiple rows in the length direction and arranged in multiple columns in the width direction. Lifting lugs 260 are arranged at corners of a top of the battery cabinet 200. The lifting lugs 260 can facilitate lifting of the battery cabinet 200. Correspondingly, the energy storage system 1000 may further include multiple pull rods 500. In the width direction, the pull rods 500 are connected to the lifting lugs 260 on diagonal lines of adjacent battery cabinets 200 in the width direction. Thus, the battery cabinets 200 can be fixed to each other in the width direction, and can be constrained and fixed by the two end frames 120 in the length direction. It may be understood that connections of the pull rods 500 may be correspondingly adjusted according to a quantity and an arrangement form of the battery cabinets 200, which fall within a concept of the present disclosure.

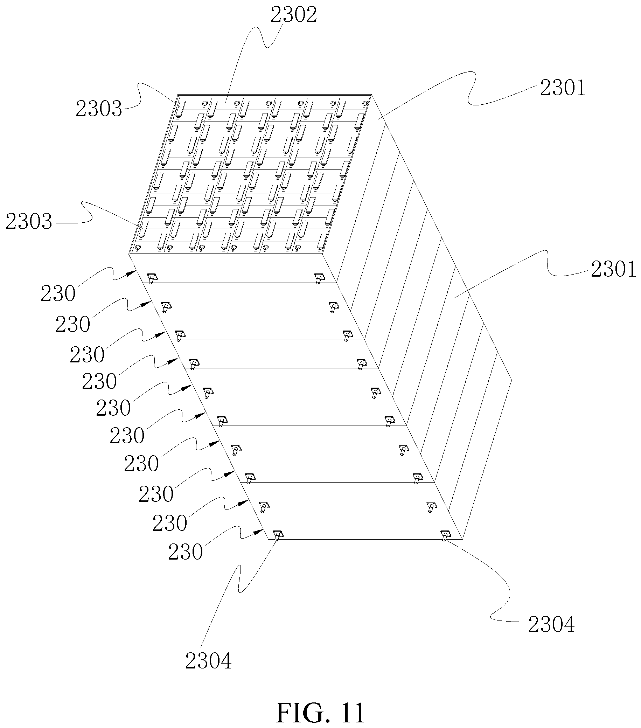

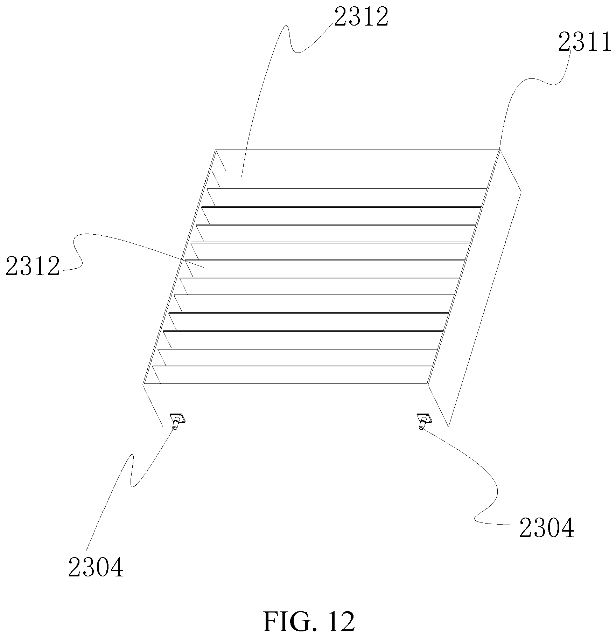

Referring to FIG. 11 and FIG. 12, in another embodiment, the battery cabinet 200 may basically be implemented with reference to a foregoing mode, with the only difference that implementation modes of the battery unit (that is, the battery unit) 230 and the temperature adjusting device 240 inside the cabinet body 210 are different, and the foregoing air guide piece 270 does not exist. Therefore, content of the same parts is not repeated in this embodiment. Only the battery unit 230 and the temperature adjusting device 240 are specifically described.

In this embodiment, the battery cabinet 200 includes multiple stacked battery units 230. The battery unit 230 includes a shelf 2301 and multiple cells 2302. Multiple battery accommodation areas are formed inside the shelf 2301. The multiple cells 2302 are respectively accommodated in the battery accommodation areas. A heat dissipation flow channel is formed in the shelf 2301. The heat dissipation flow channel is configured to circulate a cooling medium to cool the cells 2302. Correspondingly, the temperature adjusting device 240 may be a heat exchange assembly of a liquid cooling device. A water inlet/outlet pipe 2304 is arranged on the shelf 2301. The heat dissipation flow channel inside the shelf 2301 is communicated with the heat exchange assembly through the water inlet/outlet pipe 2304, so as to cool the cell 2302 through a liquid cooling solution.

For example, in some implementation modes, the shelf 2301 may include a tray 2311 and multiple partition plates 2312. One end of the tray 2311 is open, that is, the tray 2311 forms a housing with an opening in one side. The multiple partition plates 2312 are arranged in the tray 2311 to partition an interior of the tray 2311 into the multiple battery accommodation areas. The heat dissipation flow channel is formed in the tray 2311 and at least part of the partition plates 2312. In a specific implementation, the water inlet/outlet pipe 2304 may be arranged on the tray 2311. The heat dissipation flow channel is formed in part partition plates 2312 or all partition plates 2312. The partition plates 2312 are in contact with the cells 2302 in the battery accommodation areas, which can achieve constrained positioning and liquid cooling heat dissipation simultaneously.

In the battery unit 230, a terminal of the cell 2302 may face an open end of the tray 2311, and the terminals of the multiple cells 2302 are electrically connected through connecting pieces 2303 to achieve a series connection or a parallel connection between the cells 2302.

In the multiple stacked battery units 230, the tray 2311 of the battery unit 230 located on an upper layer may be configured to seal the open end of the tray 2311 of an adjacent battery unit 230 on a lower layer. The battery cabinet 200 further includes an upper cover (not shown in the drawings), configured to seal the open end of the tray 2311 of the battery unit 230 located on an uppermost layer.

At least one of the distribution device 400 and the junction device 300 is mounted on the mounting portion 1206. Correspondingly, the distribution device 400 and/or the junction device 300 mounted on the mounting portion 1206 is at least partially located in the outer contour of the bearing frame 100, so as to ensure that the energy storage system 1000 has a regular contour as much as possible.

For clarity, the "outer contour" of the bearing frame 100 may be understood as a three-dimensional contour enclosed by outermost edges of the bearing frame 100. In consideration of factors such as mounting of the battery assembly 210 and a need for controlling weight of the bearing frame 100, the bearing frame 100 is usually not set as a closed cuboid-shaped box body (for example, a standard container), but is set as a basically regular cuboid-shaped frame structure according to the contour of the container. In this case, vertexes on the outermost side of the frame structure may be taken as control points of the outer contour of the frame structure, and the cuboid-shaped contour formed by connecting the multiple control points may be understood as the "outer contour" of the bearing frame 100. Meanwhile, the outer contour of the bearing frame 100 will refer to general manufacturing and usage requirements of the container, allowing an error and a tolerance within an appropriate range.

In the foregoing energy storage system 1000, the outer contour of the bearing frame 100 is configured in the shape of the container, the bearing frame 100 defines the accommodation space, and the battery assembly 201 is accommodated and fixed in the accommodation space. Meanwhile, the mounting portion 1206 is further formed on the bearing frame 100. At least one of the distribution device 400 and the junction device 300 is mounted on the mounting portion 1206 and is at least partially located in the outer contour of the bearing frame 100. In this way, the bearing frame 100 cannot only serve as a mounting frame of the energy storage system 1000 to accommodate and fix the battery assembly 201, the junction device 300, and the distribution device 400, but also directly serve as a container unit to participate in transportation when configured in the shape of the container, so that hierarchical simplification of structural components can be achieved, thereby improving a space utilization rate and improving energy density. Meanwhile, structures such as the battery assembly 201, the distribution device 300, and the junction device 400 still remain significant design freedom, which can still meet personalized designs of products while achieving unified contours. For example, in a case of basically the same contour, capacity, weight, structural strength, and the like of the energy storage system 1000 can still be adjusted by adjusting settings such as a structure of the battery assembly 201, an internal configuration of the bearing frame 100, and structural pieces of the bearing frame 100, thereby achieving product differentiation.

The outer contour of the bearing frame 100 is configured as the contour of the container. The container may be a non-standard container with an application scale, and may alternatively be a standard container. For example, the container may be a container with general international standards, so as to facilitate transportation and circulation of the energy storage system. The following describes by taking internationally recognized 20-foot standard container and 40-foot standard container as examples respectively. It may be understood that, as long as a purpose of facilitating transportation and circulation can be achieved, the bearing frame may alternatively be set with reference to national standards, regional standards, and company standards, and has universality and interchangeability.

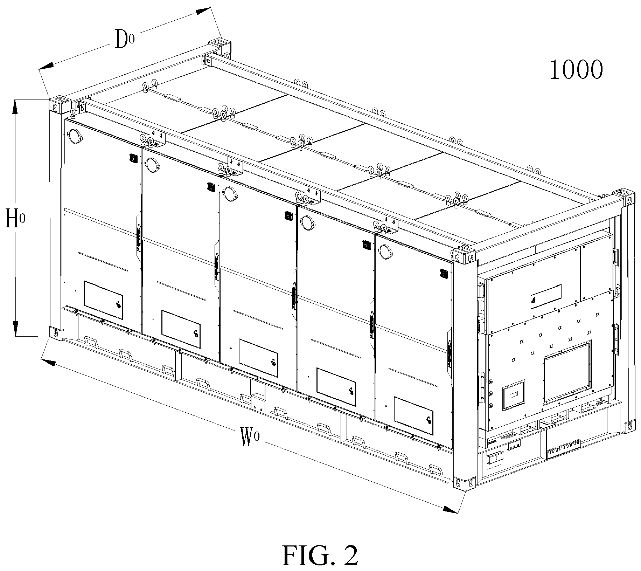

For example, in some implementation modes, the container is a 20-foot standard container. The 20-foot standard container is defined with contour dimensions: a length of 6058 mm, a height of 2591 mm (a height of a high cube is 2896 mm), and a depth of 2438 mm. Therefore, as shown in FIG. 2, the outer contour of the bearing frame 100 may be set with reference to the 20-foot standard container. Specifically, the outer contour of the bearing frame 100 is defined with a width dimension W₀, a depth dimension D₀, and a height dimension H₀, where W₀=6058 mm, D₀=2438 mm, and H₀=2896 mm. Correspondingly, the battery assembly 201 is cuboid-shaped and is defined with a width dimension W, a depth dimension D, and a height dimension H, which satisfy: 5000 mm≤W≤5958 mm, 2200 mm≤D≤2438 mm, and 2191 mm≤H≤2746 mm.

In some other implementation modes, the container may alternatively be a 40-foot standard container. Similarly, the 40-foot standard container is defined with fixed contour dimensions: a length of 12192 mm, a height of 2591 mm (a height of a high cube is 2896 mm), and a depth of 2438 mm. To simplify variables, referring to FIG. 2, the outer contour of the bearing frame 100 may be set with reference to the 40-foot standard container. Specifically, the outer contour of the bearing frame 100 is defined with a width dimension W₀, a depth dimension D₀, and a height dimension H₀, where W₀=12192 mm, D₀=2438 mm, and H₀=2896 mm. Correspondingly, the battery assembly 201 is cuboid-shaped and is defined with a width dimension W, a depth dimension D, and a height dimension H, which satisfy: 11138 mm≤W≤12096 mm, 2200 mm≤D≤2438 mm, and 2191 mm≤H≤2746 mm.

The contour dimensions of the battery assembly 201 are smaller than those of the bearing frame 100 to reserve a space for a structural design of the bearing frame 100 and simultaneously ensure that the bearing frame 100 may protect the battery assembly 201 after the battery assembly 201 is mounted to the bearing frame 100.

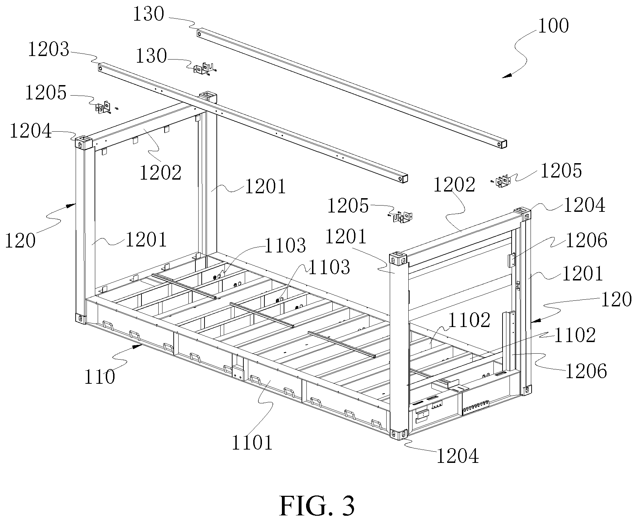

Referring to FIG. 3, FIG. 5, and FIG. 6, in some implementation modes, the bearing frame 100 may include a bottom bracket 110 and two end frames 120.

The bottom bracket 110 is configured to bear the battery assembly 201 and defines two opposite sides of the battery assembly 201. Specifically, the bottom bracket 110 has a length direction, a width direction, and a height direction that are orthogonal to one another. The bottom bracket 110 supports a bottom of the battery assembly 201 to limit the battery assembly 201 in the height direction. In a specific implementation, the bottom of the battery assembly 201 may be connected and fixed to the bottom bracket 110 through a connecting piece. In this way, the bottom bracket 110 may limit the battery assembly 201 in a horizontal direction.

In the length direction, the width direction, and the height direction, the height direction may be understood as a vertical direction. Generally, in practical applications, the height direction of the energy storage system 1000 after being placed or mounted is the vertical direction. Therefore, to facilitate understanding, a direction of the energy storage system 1000 that is the same as the vertical direction in a normal use state is defined as the height direction of the energy storage system 1000. Correspondingly, the length direction and the width direction of the energy storage system 1000 are defined in the horizontal direction. The width direction may be understood as a depth direction of the energy storage system 1000. The length direction may be understood as being consistent with the length direction of the energy storage system 1000.

The two end frames 120 are oppositely arranged on two sides of the bottom bracket 110 in the length direction and are configured to define the other two opposite sides of the battery assembly 201.

The bottom bracket 110 needs to meet a load bearing requirement, and meanwhile, an overall space occupied by the bottom bracket 110 needs to be controlled. In some implementation modes, the bottom bracket 110 is defined with a height dimension B₁, which satisfies: 150 mm≤B₁≤400 mm.

In some implementation modes, the end frame 120 may specifically include two longitudinal beams 1201 and a cross beam 1202. The two longitudinal beams 1201 extend in the height direction and are spaced away on the two sides of the bottom bracket 110 in the width direction. One end of the longitudinal beam 1201 is connected to the bottom bracket 110. The cross beam 1202 is connected between the other ends of the two longitudinal beams 1201. In other words, the two longitudinal beams 1201 form two upright posts. A lower end of the upright post may be roughly flush with a lower end face of the bottom bracket 110 and is fixedly connected to a side surface of the bottom bracket 110. The cross beam 1202 is connected between upper ends of the two upright posts, so as to form the end frame 120. The two end frames 120 are clamped on two opposite sides of the battery assembly 201.

In a specific implementation, the longitudinal beam 1201 is defined with a dimension A₁ in the length direction, which satisfies: 50 mm≤A₁≤80 mm. A dimension of the cross beam 1202 in the length direction does not exceed the dimension A₁ of the longitudinal beam 1201. Thus, the end frame 120 has appropriate constraint strength, and does not occupy excessive space.

The two longitudinal beams 1201, the cross beam 1202, and the bottom bracket 110 are enclosed to form a mounting space, and the mounting portion 1206 is arranged on an inner wall of at least one of the longitudinal beams 1201. Specifically, the two longitudinal beams 1201, the cross beam 1202, and the bottom bracket 110 are enclosed on a periphery to form a frame with a mounting space in a center. At least one of the distribution device 300 and the junction device 400 is mounted on the mounting portion 1206 and is at least partially located in the mounting space.

In a specific implementation, both the distribution device 300 and the junction device 400 may be mounted through the mounting portion 1206. Optionally, both the distribution device 300 and the junction device 400 may be located in the mounting space. In other words, both the distribution device 300 and the junction device 400 are located in the mounting space, and the distribution device 300 and the junction device 400 do not protrude from an end face of the longitudinal beam 1201. Thus, the energy storage system 1000 can be maintained in the contour of the container defined by the bearing frame 100 to facilitate transportation, and various devices can be protected by using the bearing frame 100. Referring to FIG. 4, the distribution device 300 and the junction device 400 may be pre-mounted in the end frame 120. After the energy storage system 1000 is transported and mounted to a determined site, a protective box 700 is mounted outside the distribution device 300 and the junction device 400. After being mounted, an outer end face of the protective box 700 may be higher than the outer end face of the longitudinal beam 1201 because transportation is not affected at this moment.

The bottom bracket 110 may include two side plates 1101 and multiple reinforcing plates 1102, which form a roughly cuboid-shaped base together. The two side plates 1101 may be arranged in parallel and extend in the length direction. The multiple reinforcing plates 1102 are spaced away from each other, and two ends of the reinforcing plate 1102 are respectively connected to inner walls of the two side plates 1101. The two side plates 1101 and the multiple reinforcing plates 1102 form a roughly cuboid-shaped base together. In a specific implementation, a wire hole 1103 is formed in the reinforcing plate 1102. A cable 600 of the battery assembly 201 may be led out to the junction device 400 through a gap between the reinforcing plates 1102 and the wire hole 1103. Folded edges may be provided at bottoms of the side plates 1101 and the reinforcing plates 1102, so as to facilitate supporting the battery assembly 201 born on the side plates 1101 and the reinforcing plates 1102.

Referring to FIG. 1 to FIG. 3, in some implementation modes, the bearing frame 100 further includes a top beam 130. The top beam 130 is connected between the two end frames 120 and is arranged opposite to the bottom bracket 110 to define an upper side of the battery assembly 201. For example, in a specific implementation, an upper part of the battery assembly 201 may be fixedly connected to the top beam 130 through a connecting piece. The longitudinal beam 1201 may be connected to the cross beam 1202, and the longitudinal beam 1201 may be connected to the bottom bracket 110 through corner pieces 1204 arranged at vertexes of the contour of the container. Two ends of the top beam 130 may respectively be connected between the cross beams 1202 of the two end frames 120 through fasteners 1205. The corner pieces 1204 may adopt a standard corner piece with classification society certification.

In the description of this specification, description of reference terms such as "a specific embodiment" or "a specific example", means including specific features, structures, materials, or features described in the embodiment or example in at least one embodiment or example of this application. In this specification, exemplary descriptions of the foregoing terms do not necessarily refer to the same embodiment or example.

Although the embodiments of the present disclosure have been shown and described, those of ordinary skill in the art may understand that: A variety of changes, modifications, substitutions, and variants can be made to these embodiments without departing from a principle and a purpose of the present disclosure, and the scope of the present disclosure is defined by the claims and their equivalents.

## Claims

1. A battery cabinet (200), comprising:
a cabinet body (210), internally provided with an accommodation cavity;
a plurality of battery units (230), stacked in the accommodation cavity, each battery unit (230) being provided with a heat dissipation flow channel;
a temperature adjusting device (240), arranged in the accommodation cavity and butted to the heat dissipation flow channel of the battery unit (230), to perform heat exchange with an outside of the cabinet body (210) to adjust temperatures of the plurality of battery units (230); and
a battery management device (250), arranged in the accommodation cavity and electrically connected to the battery units (230).

2. The battery cabinet (200) according to claim 1, wherein an opening is provided in one side of the cabinet body (210); the battery cabinet (200) further comprises a cabinet door (220); the cabinet door (220) is movably connected to the cabinet body (210) to open or close the opening; and
the temperature adjusting device (240) is mounted on the cabinet door (220).

3. The battery cabinet (200) according to claim 1 or 2, wherein the temperature adjusting device (240) is an air cooling device; and each battery unit (230) comprises:
a plurality of cells (2302); and
a shelf (2301), configured to accommodate and fix the plurality of cells (2302), wherein the shelf (2301) is provided with a heat dissipation flow channel, and the heat dissipation flow channel is adapted to be communicated with the air cooling device to guide a cooling airflow to perform heat exchange with the cells (2302).

4. The battery cabinet (200) according to claim 3, wherein the air cooling device comprises an external circulation air inlet (2401), an external circulation air outlet (2402), an internal circulation air inlet (2403), and an internal circulation air outlet (2404), both the external circulation air inlet (2401) and the external circulation air outlet (2402) are adapted to be communicated with external atmosphere, and both the internal circulation air inlet (2403) and the internal circulation air outlet (2404) are communicated with the accommodation cavity; and
an air guide duct is provided in a top in the accommodation cavity, and one end of the air guide duct is communicated with the internal circulation air outlet (2404) and is configured to guide an airflow blown out from the internal circulation air outlet (2404) to flow through the battery units (230).

5. The battery cabinet (200) according to claim 4, wherein the battery cabinet (200) further comprises an air guide piece (270) arranged at the top in the accommodation cavity, and the air guide piece (270) matches the cabinet body (210) to form the air guide conduct.

6. The battery cabinet (200) according to claim 4 or 5, wherein the heat dissipation flow channel is communicated with one side of the shelf (2301) close to the cabinet door (220) and one side far away from the cabinet door (220);
the airflow blown out from the internal circulation air outlet (2404) is adapted to be guided to one side of the battery unit (230) away from the cabinet door (220) through the air guide conduct, and is collected to enter the internal circulation air inlet (2403) after flowing through the heat dissipation flow channel.

7. The battery cabinet (200) according to any one of claims 4 to 6, wherein the airflow blown out from the internal circulation air outlet (2404) is adapted to be guided to a gap between the shelf (2301) and an inner wall of the cabinet body (210) by the air guide duct.

8. The battery cabinet (200) according to claim 1 or 2, wherein the temperature adjusting device (240) is a liquid cooling device; and the battery unit (230) comprises:
a shelf (2301), wherein a plurality of battery accommodation areas are formed in the shelf (2301);
a plurality of cells (2302), the plurality of cells (2302) being respectively provided in the battery accommodation areas; and
a heat dissipation flow channel, formed in the shelf (2301) and configured to circulate a cooling medium to cool the cells (2302).

9. The battery cabinet (200) according to claim 8, wherein the shelf (2301) comprises:
a tray (2311), wherein one end of the tray (2311) is open; and
a plurality of partition plates (2312), arranged in the tray (2311) to partition an interior of the tray (2311) into the plurality of battery accommodation areas, wherein
the heat dissipation flow channel is formed in the tray (2311) and at least part of the partition plates (2312).

10. The battery cabinet (200) according to claim 9, wherein in the battery unit (230), a terminal of the cell (2302) faces an open end of the tray (2311), and the terminals of the plurality of cells (2302) are electrically connected through connecting pieces (2303).

11. The battery cabinet (200) according to claim 10, wherein in the plurality of stacked battery units (230), the tray (2311) of the battery unit (230) located on an upper layer seals the open end of the tray (2311) of an adjacent battery unit (230) on a lower layer; and
the battery cabinet (200) further includes an upper cover, configured to seal the open end of the tray (2311) of the battery unit (230) located on an uppermost layer.

12. An energy storage system (1000), comprising:
a plurality of battery cabinets (200) according to any one of claims 1 to 11, the plurality of battery cabinets (200) forming a battery assembly (201);
a bearing frame (100), an outer contour of the bearing frame (100) being configured in a shape of a container and defining an accommodation space configured to accommodate and fix the battery assembly (201);
a distribution device (300), adapted to connect an external load to provide electrical energy to the external load; and
a junction device (400), adapted to electrically connect the plurality of battery cabinets (200) and the distribution device (300).

13. The energy storage system (1000) according to claim 12, wherein a mounting portion (1206) is formed on the bearing frame (100); and
at least one of the distribution device (300) and the junction device (400) is mounted on the mounting portion (1206) and is at least partially located in the outer contour.

14. The energy storage system (1000) according to claim 12, wherein the container is a 20-foot standard container, and the battery assembly (201) is cuboid-shaped and is defined with a width dimension W, a depth dimension D, and a height dimension H, which satisfy: 5000 mm≤W≤5958 mm, 2200 mm≤D≤2438 mm, and 2191 mm≤H≤2746 mm.

15. The energy storage system (1000) according to claim 12, wherein the container is a 40-foot standard container; and the battery assembly (201) is cuboid-shaped and is defined with a width dimension W, a depth dimension D, and a height dimension H, which satisfy: 11138 mm≤W≤12096 mm, 2200 mm≤D≤2438 mm, and 2191 mm≤H≤2746 mm.

16. The energy storage system (1000) according to claim 13, wherein the bearing frame (100) comprises:
a bottom bracket (110), configured to bear the battery assembly (201) and defining two opposite sides of the battery assembly (201), wherein the bottom bracket (110) has a length direction, a width direction, and a height direction that are orthogonal to one another; and
two end frames (120), wherein the two end frames (120) are oppositely arranged on two sides of the bottom bracket (110) in the length direction and are configured to define the other two opposite sides of the battery assembly (201).

17. The energy storage system according to claim 16, wherein the bottom bracket is defined with a height dimension B₁, which satisfies: 150 mm≤B₁≤400 mm.

18. The energy storage system (1000) according to claim 16, wherein the end frame (120) comprises:
two longitudinal beams (1201), extending in the height direction and spaced away on the two sides of the bottom bracket (110) in the width direction, wherein one end of the longitudinal beam (1201) is connected to the bottom bracket (110); and
a cross beam (1202), connected between the other ends of the two longitudinal beams (1201).

19. The energy storage system according to claim 18, wherein the longitudinal beam is defined with a dimension A₁ in the length direction, which satisfies: 50 mm≤A₁≤80 mm.

20. The energy storage system (1000) according to claim 18, wherein the two longitudinal beams (1201), the cross beam (1202), and the bottom bracket (110) are enclosed to form a mounting space, and the mounting portion (1206) is arranged on an inner wall of at least one of the longitudinal beams (1201); and
at least one of the distribution device (300) and the junction device (400) is mounted on the mounting portion (1206) and is located in the mounting space.

21. The energy storage system (1000) according to claim 20, wherein both the distribution device (300) and the junction device (400) are located in the mounting space, and the distribution device (300) and the junction device (400) do not protrude from an end face of the longitudinal beam (1201).

22. The energy storage system (1000) according to claim 16, wherein the bottom bracket (110) comprises:
two side plates (1101), wherein the two side plates (1101) are arranged in parallel and extend in the length direction; and
a plurality of reinforcing plates (1102), wherein the plurality of reinforcing plates (1102) are spaced away from each other, and two ends of the reinforcing plate (1102) are respectively connected to inner walls of the two side plates (1101), and a wire hole (1103) is formed in the reinforcing plate (1102).

23. The energy storage system (1000) according to any one of claims 16 to 22, wherein the bearing frame (100) further comprises a top beam (1203), the top beam (1203) is connected between the two end frames (120) and is arranged opposite to the bottom bracket (110) to define an upper side of the battery assembly.

24. The energy storage system according to claim 14 or 15, wherein the battery cabinet is cuboid-shaped and is defined with a width dimension W₁, a depth dimension D₁, and a height dimension H₁, which satisfy: 1000 mm≤W₁≤1192 mm, and a single battery cabinet is defined with a depth 1100 mm≤D₁≤1219 mm and a height dimension 1850 mm≤H₁≤2746 mm; and
width directions of the plurality of battery cabinets are arranged in the length direction of the battery assembly.
